# EUROPEAN PATENT SPECIFICATION

(11) **EP 3 354 333 B1**
(45) Date of publication and mention of the grant of the patent: **23.02.2022**
(21) Application number: 16848981.3
(22) Date of filing: 23.09.2016
(51) Int. Cl.: B01D 71/56, B01D 69/10, B01D 67/00, B01D 61/02, C02F 1/44, C08G 75/20, C08G 64/00, C08G 73/10, C08J 5/22, B01D 71/06, B01D 69/12

(54) **WATER TREATMENT MEMBRANE AND METHOD FOR MANUFACTURING SAME**
WASSERBEHANDLUNGSMEMBRAN UND VERFAHREN ZUR HERSTELLUNG DAVON
MEMBRANE DE TRAITEMENT D'EAU ET SON PROCÉDÉ DE FABRICATION

(30) Priority: 23.09.2015 KR 20150134791; 23.09.2015 KR 20150134785; 22.09.2016 KR 20160121637
(43) Date of publication of application: 01.08.2018
(73) Proprietor: LG Chem, Ltd., Seoul 07336 (KR)
(72) Inventor: LEE, Jinkuk, Daejeon 34122 (KR); CHOI, Sungyeol, Daejeon 34122 (KR); PARK, Sung Kyung, Daejeon 34122 (KR); JEON, Hyung Joon, Daejeon 34122 (KR); CHOI, Hyungsam, Daejeon 34122 (KR); SHIN, Chong Kyu, Daejeon 34122 (KR); KWAK, Bong Ju, Daejeon 34122 (KR); GIL, Hyungbae, Daejeon 34122 (KR); KIM, Sanggon, Daejeon 34122 (KR)
(74) Representative: Goddar, Heinz J.
(86) International application number: PCT/KR2016/010634
(87) International publication number: WO 2017/052256

(56) References cited:
- KR-A- 20070 086 268
- KR-A- 20130 076 498
- KR-A- 20140 143 721
- KR-B1- 970 009 657
- US-A1- 2006 065 598
- US-A1- 2011 005 997
- US-A1- 2011 284 458
- US-A1- 2017 056 837
- KREBS F C ET AL: "Polybiguanides, particularly polyethylene hexamethylene biguanide, have activity against human immunodeficiency virus type 1", BIOMEDICINE AND PHARMACOTHERAPY, ELSEVIER, FR, vol. 59, no. 8, 1 September 2005 (2005-09-01), pages 438-445, XP027640279, ISSN: 0753-3322 [retrieved on 2005-09-01]
- Ulrike Bernauer ET AL: "OPINION ON the safety of poly(hexamethylene) biguanide hydrochloride (PHMB)", , 18 June 2014 (2014-06-18), XP055576468, Retrieved from the Internet: URL:https://ec.europa.eu/health/scientific _committees/consumer_safety/docs/sccs_o_15 7.pdf [retrieved on 2019-04-02]

## Description

### [Technical Field]

This application claims priority to and the benefit of Korean Patent Application Nos. 10-2015-0134785, 10-2015-0134791, and 10-2016-0121637 filed in the Korean Intellectual Property Office on September 23, 2015, September 23, 2015, and September 22, 2016, respectively,.

The present specification relates to a water treatment membrane and a method for manufacturing the same.

### [Background Art]

Developing a new source of water resources has emerged as an urgent problem due to recent serious pollution of water quality environments and water shortage. Studies on the pollution of water quality environments aim for high-quality residential and industrial water, and treatment of various domestic sewage and industrial wastewater, and interests in water treatment processes using a membrane having an advantage of energy saving have been rising. Further, accelerated reinforcement on environment regulations is expected to advance activation of membrane technologies. It is difficult for traditional water treatment processes to satisfy the tightened regulations, but membrane technologies secure excellent treatment efficiency and stable treatment and thus are expected to become a leading technology in the field of water treatment in the future.

Liquid separation is divided into micro filtration, ultra filtration, nano filtration, reverse osmosis, stannizing, active transport, electrodialysis, and the like, depending on the pore of the membrane. Among them, the reverse osmosis method refers to a process of performing desalination work by using a semi-permeable membrane which permeates water, but shows impermeability to salts, and when high pressure water in which salts are dissolved is introduced into one surface of the semi-permeable membrane, pure water from which salts have been removed is released into the other surface at low pressure.

Recently, water on a scale of approximately 3,785 billion liter/day (one billion gal/day) has been subjected to a desalination process through the reverse osmosis method, and since a first desalination process using reverse osmosis was published in the 1930's, numerous studies on semi-permeable membrane materials in this field have been carried out. Among them, what is mainly used due to the commercial success of the reverse osmosis method is a cellulose-based asymmetric membrane and a polyamide-based composite membrane. Cellulose-based membranes developed in the initial phase of the reverse osmosis membrane have recently tended to be rarely used due to various disadvantages in that the operable pH range is narrow, the membranes are deformed at high temperature, lots of costs required for operation are needed due to the use of high pressure, the membranes are vulnerable to microbes, and the like.

Meanwhile, polyamide-based composite membranes are manufactured by a method of forming a polysulfone layer on a non-woven fabric to form a microporous support, immersing the microporous support in an aqueous solution of m-phenylene diamine (hereinafter, referred to as mPD) to form an mPD layer, immersing the microporous support again in an organic solvent of trimesoyl chloride (hereinafter, referred to as TMC) or coating the microporous support with the organic solvent to bring the mPD layer into contact with TMC, and performing an interfacial polymerization to form a polyamide layer. By bringing a non-polar solution into contact with a polar solution, the polymerization occurs only at the interface thereof, and accordingly, a polyamide layer having a very small thickness is formed. The polyamide-based composite membranes are highly stable against a change in pH, can be operated at low pressure, and have an excellent salt rejection, as compared to the existing cellulose-based asymmetric membranes, and accordingly, the polyamide-based composite membranes are currently utilized in the mainstream of water treatment membranes.

Meanwhile, there are several conditions required for commercially using the water treatment membranes, and one of the conditions is that the water treatment membranes need to have a high salt rejection. The salt rejection commercially required for the water treatment membrane is at least 97% or more based on semi-brine. Another important property of the water treatment membranes is an ability to allow a relatively large amount of water to pass through the membrane even at relatively low pressure, that is, high flux characteristics. However, since the salt rejection and the permeation flux characteristics have conflicting properties, there are actually many difficulties in manufacturing a water treatment membrane having excellent salt rejection and permeation flux.
US 2006/0065598 A1 relates to a method of treating a reverse osmosis membrane for boron rejection enhancement, comprising contacting the reverse osmosis membrane with a Chemical coating such as PHMB, wherein the reverse osmosis membrane is part of a single-pass reverse osmosis System is configured to reduce the boron concentration of normal seavvater or brackish water to less than a predetermined amount.
US 2011/0005997 A1 discloses RO membranes using chlorinated water as a feed stream maybe protected from damage by the chlorine with a protective layer including reactive nitrogen which forms chloromines on the surface of the membrane that reduce chlorine penetration. This protective layer also provides substantial anti-fouling capabilities, whether used with a chlorinated or unchlorinated feed stream because the chloramines are anti-bacterial. Although chlorine is lost in use, the anti-fouling layer or coating can be recharged with additional chlorine without damaging the discrimination layer. The anti-fouling layer or coating may be advantageously used with thin film composite, TFC, membranes for use in forward and reverse osmosis may include nanoparticles, monohydrolyzed and/or di-hydrolyzed TMC, and/or alkaline earth alkaline metal complexes or other additives.
US 2011/284458 A1 relates to composite membranes including a coating of polyalkylene oxide and biguanide compounds along with various methods for making and using the same.

### [Detailed Description of the Invention]

### [Technical Problem]

The present specification has been made in an effort to provide a water treatment membrane having an improved filtration performance, and a method for manufacturing the same.

### [Technical Solution]

The present specification provides a water treatment membrane obtained by the method according to the present invention including: a porous support; and a polyamide active layer provided on the porous support,
in which the polyamide active layer includes a polymer or a polymer having a structure which is bonded to the inside or the surface of the polyamide active layer while maintaining the structure of the polymer represented by the following Chemical Formula 1 having a weight average molecular weight of 100 g/mol to 1,200 g/mol inside or on a surface of the polyamide active layer, and
   a content of the polymer is 0.001 wt% or more and 1 wt% or less based on the polyamide active layer: 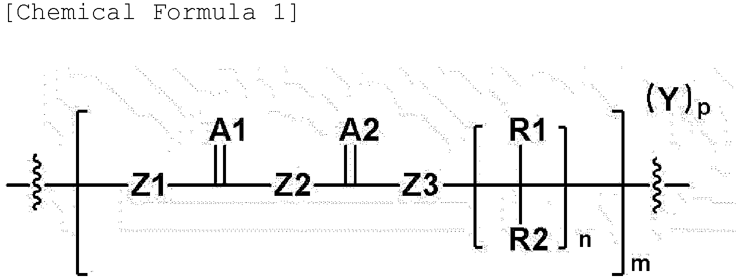
in Chemical Formula 1,
   R1 and R2 are hydrogen,
   Z1 to Z3 are NH,
   A1 and A2 are the same as or different from each other, and are each independently NH, or NH₂⁺,
      when at least one of A1 and A2 is NH₂⁺, Y is selected from the group consisting of HSO₄⁻, SO₄²⁻, NO₃⁻, CO₃²⁻, HCO₃⁻, H₂PO₄⁻, HPO₄²⁻, PO₄³⁻, Cl⁻, Br⁻, and F⁻,
   n is an integer from 1 to 10,
   m is an integer from 1 to 60,
   p is an integer from 0 to 4, and
   when n, m, and p are each 2 or more, the structures in the parenthesis are the same as or different from each other.

In addition, the present specification provides a method for manufacturing a water treatment membrane, the method including:
preparing a porous support; and
forming a polyamide active layer on the porous support by using an interfacial polymerization of an aqueous solution including an amine compound and an organic solution including acyl halide,
in which the aqueous solution or the organic solution includes a polymer or a polymer having a structure which is bonded to the inside or the surface of the polyamide active layer while maintaining the structure of the polymer represented by Chemical Formula 1 and having a weight average molecular weight of 100 g/mol to 1,200 g/mol, and a content of the polymer is 0.001 wt% or more and 1 wt% or less based on the aqueous solution or the organic solution: 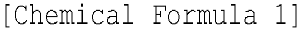 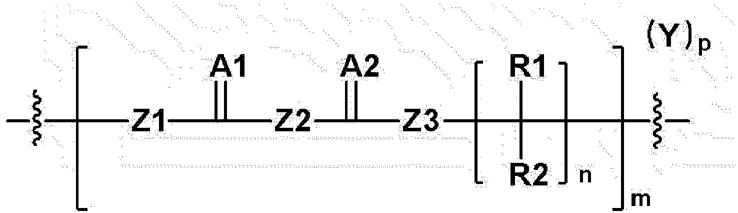
in Chemical Formula 1,
   R1 and R2 are hydrogen,
   Z1 to Z3 are NH,
   A1 and A2 are the same as or different from each other, and are each independently NH, or NH₂⁺,
      when at least one of A1 and A2 is NH₂⁺, Y is selected from the group consisting of HSO₄⁻, SO₄²⁻, NO₃⁻, CO₃²⁻, HCO₃⁻, H₂PO₄⁻, HPO₄²⁻, PO₄³⁻, Cl⁻, Br⁻, and F⁻,
   n is an integer from 1 to 10,
   m is an integer from 1 to 60,
   p is an integer from 0 to 4, and
   when n, m, and p are each 2 or more, the structures in the parenthesis are the same as or different from each other.

Furthermore, an exemplary embodiment of the present specification provides a water treatment module including the above-described water treatment membrane.

### [Advantageous Effects]

According to an exemplary embodiment of the present specification, it is possible to suppress a turbidity or precipitation phenomenon on an aqueous solution and improve a boron rejection rate by introducing a polymer having an adjusted molecular weight or an improved hydrophilicity.

Further, according to an exemplary embodiment of the present specification, it is possible to prevent contamination in the process of manufacturing a water treatment membrane.

In addition, according to an exemplary embodiment of the present specification, there is an effect capable of improving a boron rejection rate of a finally manufactured water treatment membrane.

Furthermore, according to an exemplary embodiment of the present specification, there is an effect capable of improving a salt rejection and/or permeation flux characteristics as compared to a water treatment membrane manufactured by an existing method.

### [Brief Description of Drawings]

FIG. 1 illustrates an experimental result in which there occur turbidity and precipitation in an amine aqueous solution including the existing PHB having a high weight average molecular weight as a boron rejection rate enhancing agent.
FIG. 2 illustrates a deterioration in processability due to the contamination of a manufacturing facility when the existing PHB having a high weight average molecular weight is used as a boron rejection rate enhancing agent.
FIGS. 3(a) to 3(c) illustrate experimental results which confirm whether amine aqueous solutions according to Examples 1 to 3 are turbid or transparent, and FIGS. 3(d) and 3(e) illustrate experimental results which confirm whether amine aqueous solutions according to Comparative Examples 1 and 2 are turbid or transparent.
FIG. 4 illustrates that an amine aqueous solution is slightly turbid at less than 10°C when a polyamide active layer is prepared by using PBB according to an exemplary embodiment of the present specification as a boron c rate enhancing agent.

### [Best Mode]

When one member is disposed "on" another member in the present specification, this includes not only a case where the one member is brought into contact with another member, but also a case where still another member is present between the two members.

When one part "includes" one constituent element in the present specification, unless otherwise specifically described, this does not mean that another constituent element is excluded, but means that another constituent element may be further included.

The present specification provides a water treatment membrane obtained by the method of the present invention including: a porous support; and a polyamide active layer provided on the porous support,
in which the polyamide active layer includes a polymer or a polymer having a structure which is bonded to the inside or the surface of the polyamide active layer while maintaining the structure of the polymer represented by the following Chemical Formula 1 having a weight average molecular weight of 100 g/mol to 1,200 g/mol inside or on a surface of the polyamide active layer and
a content of the polymer is 0.001 wt% or more and 1 wt% or less based on the polyamide active layer: 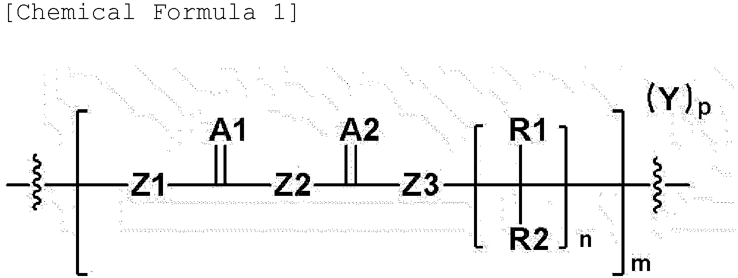
in Chemical Formula 1,
   R1 and R2 are hydrogen,
   Z1 to Z3 are NH,
   A1 and A2 are the same as or different from each other, and are each independently NH, NH₂⁺,
      when at least one of A1 and A2 is NH₂⁺, Y is selected from the group consisting of HSO₄⁻, SO₄²⁻, NO₃⁻, CO₃²⁻, HCO₃⁻, H₂PO₄⁻, HPO₄²⁻, PO₄³⁻, Cl⁻, Br⁻, and F⁻,
   n is an integer from 1 to 10,
   m is an integer from 1 to 60,
   p is an integer from 0 to 4, and
   when n, m, and p are each 2 or more, the structures in the parenthesis are the same as or different from each other.

An existing reverse osmosis membrane exhibits a boron rejection rate of approximately 80% to 85% when poly(hexamethylene biguanide) (PHB) having a high molecular weight is used as a boron rejection rate enhancing agent during the process of manufacturing the reverse osmosis membrane.

However, the existing boron rejection rate enhancing agent has a weight average molecular weight of 1,300 g/mol or more, so that when the boron rejection rate enhancing agent is introduced in an amount of 0.1% or more, there occurs a problem in that an amine aqueous solution including PHB becomes turbid, or a precipitation occurs, and as a result, PHB is not dissolved. As a result, when 0.1 wt% or more of PHB is added into the amine aqueous solution, PHB is not dissolved, and for this reason, there is a problem in that a predetermined or more boron rejection rate may not be secured.

Further, a contamination problem of a manufacturing facility of a water treatment membrane may occur due to the turbidity and precipitation phenomenon occurring when 0.1 wt% or more of PHB is added.

In order to solve these problems, the present inventors developed a polymer capable of improving processability and improving the boron rejection by preventing the turbidity and precipitation phenomenon in an amine aqueous solution through a boron rejection enhancing agent having improved water solubility as compared to PHB used in the related art.

That is, the present invention has effects capable of improving the dispersion and stability of the above-described polymer in a polyamide active layer of a water treatment membrane and improving a filtration performance of the water treatment membrane by introducing a polymer having a low weight average molecular weight of approximately 100 g/mol to 1,200 g/mol or a polymer having a short alkyl chain as compared to the existing PHB having a high molecular weight.

According to an exemplary embodiment of the present specification, the polymer has a weight average molecular weight of 100 g/mol to 1,200 g/mol, preferably 200 g/mol to 1,000 g/mol, and more preferably 400 g/mol to 950 g/mol.

According to an exemplary embodiment of the present specification, when the polymer has a weight average molecular weight of 100 g/mol or more, there is an effect capable of preventing a phenomenon in which the boron rejection rate is lowered due to the polymer is gradually washed away without remaining in the film according to the period of time in which the membrane is used, and when the polymer has a weight average molecular weight of 1,200 g/mol or less, there is an effect capable of preventing a phenomenon in which the polymer is not dispersed in the aqueous solution due to a phenomenon in which the water solubility is lowered as the molecular weight is increased, and there is an effect capable of securing a suitable boron rejection rate because the polymer remains in the active layer.

That is, according to an exemplary embodiment of the present specification, the polymer has a higher water solubility than that of the existing PHB having a high molecular weight.

According to the present specification, Z1 to Z3 are NH.

According to the present specification, A1 and A2 are the same as or different from each other, and are each independently NH or NH₂⁺.

According to the present specification, Z1 to Z3 are NH, and A1 and A2 are the same as or different from each other, and are each independently NH or NH₂⁺.

According to an exemplary embodiment of the present specification, an absolute value of a multiplied value of the number of ions of Y by p may be the same as an absolute value of an added value of the number of ions of A1 and the number of ions of A2.

According to an exemplary embodiment of the present specification, n is 1 to 9.

According to an exemplary embodiment of the present specification, n is 1 to 8.

According to an exemplary embodiment of the present specification, n is 2 to 6.

According to an exemplary embodiment of the present specification, n is 1.

According to an exemplary embodiment of the present specification, n is 2.

According to an exemplary embodiment of the present specification, n is 3.

According to an exemplary embodiment of the present specification, n is 4.

According to an exemplary embodiment of the present specification, n is 5.

According to an exemplary embodiment of the present specification, n is 6.

According to an exemplary embodiment of the present specification, n is 7.

According to an exemplary embodiment of the present specification, n is 8.

According to an exemplary embodiment of the present specification, n is 9.

According to an exemplary embodiment of the present specification, n is 10.

According to an exemplary embodiment of the present specification, m is 1 to 60.

According to an exemplary embodiment of the present specification, m is 1 to 40.

According to an exemplary embodiment of the present specification, m is 1 to 30.

In the present specification, the above-described contents may be equally applied to the description on the polymer.

According to the present specification, the structure derived from the polymer means a structure which is bonded to the inside or the surface of the polyamide active layer while maintaining the structure of the polymer. Furthermore, the structure derived from the polymer may mean a structure in which some functional groups of the polymer are substituted inside or on the surface of the polyamide active layer and thus are bonded to the inside or the surface of the polyamide active layer.

According to an exemplary embodiment of the present specification, the polymer may also be a polymer which is bonded to a polymer matrix of the polyamide active layer, and may be in the form in which the polymer is dispersed in a polymer matrix of the polyamide active layer.

The polymer matrix may mean a network structure of a polyamide polymer.

Specifically, according to an exemplary embodiment of the present specification, the polymer may be added when the polyamide active layer is formed through an interfacial polymerization, and may be crosslinked to and bonded to a polyamide polymer.

Further, the polymer represented by Chemical Formula 1 may be physically bonded to an empty space in the polymer matrix of the polyamide active layer. In addition, the polymer is disposed in an empty space in the polymer matrix of the polyamide active layer, and may be fixed to the chains of the polymer matrix by intermolecular attraction.

According to the present specification, in the water treatment membrane, the content of the polymer is 0.001 wt% or more and 1 wt% or less, and preferably 0.01 wt% or more and 1 wt% or less, based on the polyamide active layer.

According to an exemplary embodiment of the present specification, in the water treatment membrane, when the content of the polymer is 0.001 wt% or more based on the polyamide active layer, there is an effect capable of expecting the boron rejection rate effect by securing an appropriate content of the polymer in the polyamide active layer, and when the content of the polymer is 1 wt% or less, it is possible to expect that the boron rejection rate is improved by preventing the polymer from being saturated in the active layer.

According to an exemplary embodiment of the present specification, a NaCl rejection of the water treatment membrane may be 95% or more, preferably 98% or more, more preferably 99% or more, and even more preferably 99.3% or more.

According to an exemplary embodiment of the present specification, the boron rejection rate of the water treatment membrane may be 80% or more, more specifically 80% or more and 99.9% or less, and even more preferably 89% or more and 96% or less, in raw water with a pH of 8.

According to an exemplary embodiment of the present specification, a flux of the water treatment membrane may be 11.9 L/m²/h (7 gfd) or more, preferably 25.5 L/m²/h (15 gfd) or more, more preferably 30.6 L/m²/h (18 gfd) or more, and even more preferably 32.3 L/m²/h (19 gfd) or more.

Further, according to an exemplary embodiment of the present specification, the water treatment membrane has a thickness of 100 µm or more and 250 µm or less, and when the water treatment membrane has a thickness of 100 µm or more, there is an effect capable of preventing a phenomenon in which the salt rejection and flux of the membrane is reduced, and when the water treatment membrane has a thickness of 250 µm or less, there is an effect capable of preventing a phenomenon in which the salt rejection of the membrane is reduced.

In addition, the present specification provides a method for manufacturing a water treatment membrane, the method including:
preparing a porous support; and
forming a polyamide active layer on the porous support by using an interfacial polymerization of an aqueous solution including an amine compound and an organic solution including acyl halide,
in which the aqueous solution or the organic solution includes a polymer or a polymer having a structure which is bonded to the inside or the surface of the polyamide active layer while maintaining the structure of the polymer represented by Chemical Formula 1 and having a weight average molecular weight of 100 g/mol to 1,200 g/mol, and a content of the polymer is 0.001 wt% or more and 1 wt% or less based on the aqueous solution or the organic solution: 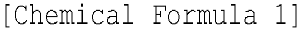 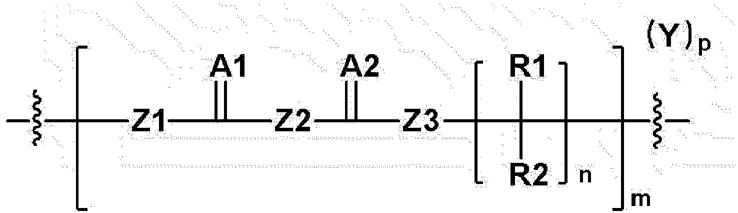
in Chemical Formula 1,
   R1 and R2 are hydrogen,
   Z1 to Z3 are NH,
   A1 and A2 are the same as or different from each other, and are each independently NH, or NH₂⁺,
      when at least one of A1 and A2 is NH₂⁺, Y is selected from the group consisting of HSO₄⁻, SO₄²⁻, NO₃⁻, CO₃²⁻, HCO₃⁻, H₂PO₄⁻, HPO₄²⁻, PO₄³⁻, Cl⁻, Br⁻, and F⁻,
   n is an integer from 1 to 10,
   m is an integer from 1 to 60,
   p is an integer from 0 to 4, and
   when n, m, and p are each 2 or more, the structures in the parenthesis are the same as or different from each other.

In the present specification, the above-described contents may be equally applied to the description on the polymer.

According to an exemplary embodiment of the present specification, the content of the polymer may be 0.001 wt% or more and 1 wt% or less, and preferably 0.1 wt% or more and 1 wt% or less, based on the aqueous solution or the organic solution.

That is, according to an exemplary embodiment of the present specification, when the content of the polymer is 0.001 wt% or more based on the aqueous solution or the organic solution, there is an effect capable of expecting the boron rejection rate effect by securing an appropriate content of the polymer in the polyamide active layer, and when the content of the polymer is 1 wt% or less, an opaque state is formed with respect to the aqueous solution or the organic solution to generate a precipitation, and as a result, there is an effect capable of preventing a problem of contaminating a membrane manufacturing facility.

According to an exemplary embodiment of the present specification, the aqueous solution including the amine compound may include the above-described polymer.

That is, according to an exemplary embodiment of the present specification, the content of the polymer may be 0.001 wt% or more and 1 wt% or less, and preferably 0.1 wt% or more and 1 wt% or less, based on the aqueous solution including the amine compound.

According to an exemplary embodiment of the present specification, when the content of the polymer is 0.001 wt% or more based on the aqueous solution, there is an effect capable of expecting the boron rejection rate effect by securing an appropriate content of the polymer in the polyamide active layer, and when the content of the polymer is 1 wt% or less, an opaque state is formed with respect to the aqueous solution or the organic solution to generate a precipitation, and as a result, there is an effect capable of preventing a problem of contaminating a membrane manufacturing facility.

In the present specification, the above-described contents may be equally applied to the description on the polymer.

According to an exemplary embodiment of the present specification, as the porous support, it is possible to use a porous support in which a coating layer of a polymer material is formed on a non-woven fabric. As the polymer material, it is possible to use, for example, polysulfone, polyethersulfone, polycarbonate, polyethylene oxide, polyimide, polyetherimide, polyether ether ketone, polypropylene, polymethylpentene, polymethyl chloride, polyvinylidene fluoride, and the like, but the polymer material is not limited thereto. Specifically, as the polymer material, polysulfone may be used.

According to an exemplary embodiment of the present specification, the porous support may have a thickness of 60 µm to 100 µm, but the thickness is not limited thereto, and may be adjusted, if necessary. Further, it is preferred that the porous support has a pore size of 1 nm to 500 nm, but the pore size is not limited thereto.

According to an exemplary embodiment of the present specification, the polyamide active layer may be formed through forming an aqueous solution layer including an amine compound on a porous support; and forming a polyamide active layer by bringing an organic solution including an acyl halide compound and an organic solvent into contact with the aqueous solution layer including the amine compound.

That is, according to an exemplary embodiment of the present specification, the forming of the aqueous solution layer including the amine compound is not particularly limited, and the method may be used without limitation as long as the method may form an aqueous solution layer on a porous support. Specifically, examples of the method of forming the aqueous solution layer including the amine compound on the porous support include spraying, application, dipping, dropwise addition, and the like.

According to an exemplary embodiment of the present specification, when the aqueous solution layer including the amine compound is brought into contact with the organic solution including the acyl halide compound, polyamide is produced by an interfacial polymerization while the amine compound and the acyl halide compound, which are coated on the surface, are reacted with each other, and the polyamide is adsorbed on the microporous support, so that a thin film is formed. Further, according to an exemplary embodiment of the present specification, an active layer may be formed by bringing the organic solution including the acyl halide compound into contact with the aqueous solution layer including the amine compound by means of a method such as dipping, spray, or coating.

According to an exemplary embodiment of the present specification, the aqueous solution layer may be additionally subjected to removing an excess aqueous solution including an amine compound, if necessary. The aqueous solution layer formed on the porous support may be non-uniformly distributed when the aqueous solution present on the porous support is present in an excessive amount, and when the aqueous solution is non-uniformly distributed, a non-uniform active layer may be formed by a subsequent interfacial polymerization. Accordingly, after the aqueous solution layer is formed on the support, it is preferred to remove an excess aqueous solution. The removal of the excess aqueous solution is not particularly limited, but may be performed by using, for example, a sponge, an air knife, a nitrogen gas blowing, natural drying, or a compression roll, and the like.

According to an exemplary embodiment of the present specification, the amine compound in the aqueous solution including the polymer and the amine compound is not limited in kind as long as the amine compound is an amine compound used for manufacturing a water treatment membrane, but as a specific example thereof, m-phenylenediamine, p-phenylenediamine, 1,3,6-benzenetriamine, 4-chloro-1,3-phenylenediamine, 6-chloro-1,3-phenylenediamine, 3-chloro-1,4-phenylenediamine or a mixture thereof is preferred.

According to an exemplary embodiment of the present specification, the acyl halide compound is not particularly limited, but may be, for example, a mixture of one or more selected from the compound group consisting of trimesolyl chloride, isophthaloyl chloride, and terephthaloyl chloride as an aromatic compound having 2 to 3 carboxylic acid halides.

Further, according to an exemplary embodiment of the present specification, the content of the acyl halide compound may be 0.1 part by weight or more and 0.5 part by weight or less, based on 100 parts by weight of the organic solution.

That is, according to an exemplary embodiment of the present specification, when the content of the acyl halide compound is 0.1 part by weight or more based on 100 parts by weight of the organic solution, there is an effect capable of preventing a phenomenon in which the salt rejection and flux of a finally manufactured membrane is reduced, and when the content of the acyl halide compound is 0.5 part by weight or less based on 100 parts by weight of the organic solution, there is an effect capable of preventing a phenomenon in which the salt rejection of a finally manufactured membrane is reduced.

In addition, according to an exemplary embodiment of the present specification, the organic solution may further include an organic solvent, and as the organic solvent, it is possible to use an aliphatic hydrocarbon solvent, for example, Freons and a hydrophobic liquid, which is immiscible with water, such as hexane, cyclohexane, heptane, and an alkane, which have 5 to 12 carbon atoms, for example, an alkane having 5 to 12 carbon atoms, and IsoPar (Exxon), ISOL-C (SK Chem.), ISOL-G (Exxon), and the like, which are a mixture thereof, but the organic solvent is not limited thereto.

According to an exemplary embodiment of the present specification, the organic solvent may be included in an amount of 80 parts by weight or more and 99.499 parts by weight or less based on 100 parts by weight of the organic solution. When the content of the organic solvent is 80 parts by weight or more based on 100 parts by weight of the organic solution, there is an effect capable of preventing a phenomenon in which the salt rejection and flux of a finally manufactured membrane is reduced, and when the content of the organic solvent is 99.499 parts by weight or less based on 100 parts by weight of the organic solution, there is an effect capable of preventing a phenomenon in which the salt rejection of a finally manufactured membrane is reduced.

According to an exemplary embodiment of the present specification, the water treatment membrane may be used as a microfiltration membrane, an ultrafiltration membrane, a nanofiltration membrane, or a reverse osmosis membrane, and the like, and specifically, the water treatment membrane may be used as a reverse osmosis membrane.

Another exemplary embodiment of the present specification provides a water treatment module including the above-described water treatment membrane.

The specific kind of water treatment module is not particularly limited, and examples thereof include a plate & frame module, a tubular module, a hollow & fiber module, or a spiral wound module, and the like. Furthermore, the other constitutions and manufacturing methods of the water treatment module, and the like are not particularly limited as long as the water treatment module includes the above-described water treatment membrane according to an exemplary embodiment of the present specification, and a general means publicly known in this field may be adopted without limitation.

Meanwhile, the water treatment module according to an exemplary embodiment of the present specification has excellent salt rejection and flux, and excellent chemical stability and thus may be usefully used in a water treatment apparatus such as a domestic/industrial water purification apparatus, a sewage treatment apparatus, and a sea and fresh water treatment apparatus.

### [Mode for Invention]

Hereinafter, the present specification will be described in detail with reference to Examples in order to specifically explain the present specification.. The Examples of the present specification are provided to more completely explain the present specification to a person with ordinary skill in the art.

### <Examples> Method for Manufacturing Water Treatment Membrane

### <Example 1>

18 wt% of a polysulfone solid content was put into and dissolved in an N,N-dimethylformamide (DMF) solution at 80°C to 85°C for 12 hours or more to obtain a uniform liquid phase. The solution was cast to a thickness of 45 µm to 50 µm on a polyester non-woven fabric having a thickness of 95 µm to 100 µm. And then, the cast non-woven fabric was put into water to manufacture a porous polysulfone support.

An aqueous solution containing 4 wt% of meta phenylenediamine (mPD), 0.1 wt% of a surfactant, 0.1 wt% of poly(hexamethylene biguanide) (PHB) having a molecular weight of 900 g/mol, and 0.07 wt% of an flux enhancing agent was applied onto the porous polysulfone support by using a slot coating. At this time, the aqueous solution was colorless and transparent, or had transparent yellow. An excessive amount of an aqueous solution layer, which was generated when the aqueous solution was applied to the porous polysulfone support, was removed with an air knife, and then a solution including 95.91 wt% of Isopar G, 4 wt% of mesitylene, and 0.19 wt% of trimesoyl chloride (TMC) was applied thereon to form a membrane. The thus-formed membrane was dried until the liquid components are completely evaporated, and then was washed in a DIW bath.

### <Example 2>

A water treatment membrane was manufactured in the same manner as in Example 1, except that 0.2 wt% of PHB having a molecular weight of 900 g/mol was used.

### <Example 3>

A water treatment membrane was manufactured in the same manner as in Example 1, except that 0.5 wt% of PHB having a molecular weight of 900 g/mol was used.

### <Example 4>

A water treatment membrane was manufactured in the same manner as in Example 1, except that 0.1 wt% of poly(ethylene biguanide) (PEB) having a molecular weight of 600 g/mol was used instead of PHB having a molecular weight of 900 g/mol.

### <Example 5>

A water treatment membrane was manufactured in the same manner as in Example 1, except that 0.2 wt% of poly(ethylene biguanide) (PEB) having a molecular weight of 600 g/mol was used instead of PHB having a molecular weight of 900 g/mol.

### <Example 6>

A water treatment membrane was manufactured in the same manner as in Example 1, except that 0.5 wt% of poly(ethylene biguanide) (PEB) having a molecular weight of 600 g/mol was used instead of PHB having a molecular weight of 900 g/mol.

### <Example 7>

A water treatment membrane was manufactured in the same manner as in Example 1, except that 0.5 wt% of poly(n-butylene biguanide) (PBB) having a molecular weight of 750 g/mol was used instead of PHB having a molecular weight of 900 g/mol.

### <Comparative Example 1>

A water treatment membrane was manufactured in the same manner as in Example 1, except that 0.1 wt% of PHB having a molecular weight of 1,300 g/mol was used instead of PHB having a molecular weight of 900 g/mol.

### <Comparative Example 2>

A water treatment membrane was manufactured in the same manner as in Example 1, except that 0.2 wt% of PHB having a molecular weight of 1,300 g/mol was used instead of PHB having a molecular weight of 900 g/mol.

### <Experimental Example> Evaluation of Performance of Water Treatment Membrane

The water treatment membranes manufactured in Examples 1 to 7 and Comparative Examples 1 and 2 were evaluated under a pressure of 5,51 MPa (800 psi) in an aqueous solution containing 3,200 ppm of NaCl and 5 ppm of boron. At this time, the NaCl rejection was measured by measuring the difference in electric conductivity between produced water and raw water, and the flux was calculated by measuring the volume of produced water secured per unit time (5 minutes). The difference in content of boron between produced water and raw water was measured by using ICP-OES, and the boron rejection rate was calculated through the measurement.

The experimental results of measuring the NaCl rejection, the boron rejection rate, and the flux of the above-described water treatment membranes manufactured according to Examples 1 to 7 and Comparative Examples 1 and 2 are shown in the following Table 1.

**[Table 1]**

| Classification | Boron rejection enhancing agent | | | NaCl rejection rate (%) | Boron rejection rate (%) | flux LMH [L/m²/h] (GFD) |
|---|---|---|---|---|---|---|
| | Type | Molecular weight (g/mol) | Content (wt%) | | | |
| Example 1 | PHB | 900 | 0.1 | 99.3 | 91.2 | 37.4 (22) |
| Example 2 | PHB | 900 | 0.2 | 99.7 | 93.6 | 35.7 (21) |
| Example 3 | PHB | 900 | 0.5 | 99.8 | 95.2 | 34.0 (20) |
| Example 4 | PEB | 600 | 0.1 | 99.5 | 90.3 | 39.1 (23) |
| Example 5 | PEB | 600 | 0.2 | 99.7 | 92.4 | 34.0 (20) |
| Example 6 | PEB | 600 | 0.5 | 99.8 | 95.6 | 32.3 (19) |
| Example 7 | PBB | 750 | 0.5 | 99.5 | 91.2 | 37.4 (22) |
| Comparative Example 1 | PHB | 1300 | 0.1 | 99.1 | 82.1 | 35.7 (21) |
| Comparative Example 2 | PHB | 1300 | 0.2 | 99 | 82.2 | 35.7 (21) |

| | | | | | | |
|---|---|---|---|---|---|---|
| *PEB: Poly(ethylene biguanide) *PBB: Poly(n-butylene biguanide) *PHB: Poly(hexamethylene biguanide) | | | | | | |

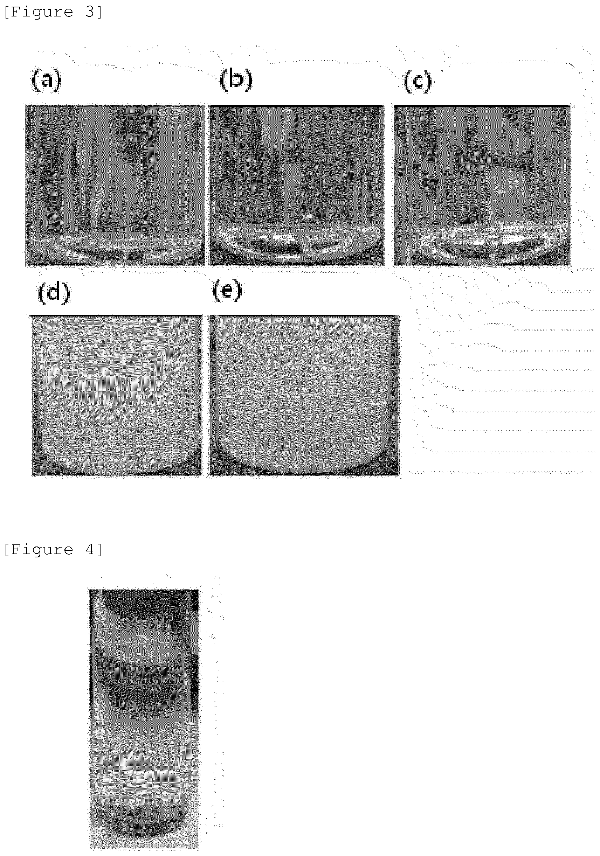

As described above, when PHB having a molecular weight of 900 g/mol was used as in Examples 1 to 3, it was confirmed that the amine aqueous solution used when the polyamide active layer was prepared was transparent, and the results are shown in FIGS. 3(a) to (c). That is, FIG. 3(a) is an experimental result in Example 1, FIG. 3(b) is an experimental result in Example 2, and FIG. 3(c) is an experimental result in Example 3.

In addition, when PBB was used as in Example 7, the amine aqueous solution used when the polyamide active layer was prepared had a slight turbidity at less than 10°C, and the aspect is illustrated in FIG. 4. However, at 10°C or more, the amine aqueous solution was transparent, and the water treatment membrane manufacturing facility was not contaminated.

In contrast, when the existing PHB having a molecular weight of 1,300 g/mol was used as in Comparative Examples 1 and 2, it was confirmed that the amine aqueous solution used when the polyamide active layer was prepared became turbid and a precipitation was generated, the case in Comparative Example 1 is illustrated in FIG. 3(d), and the case in Comparative Example 2 is illustrated in FIG. 3(e).

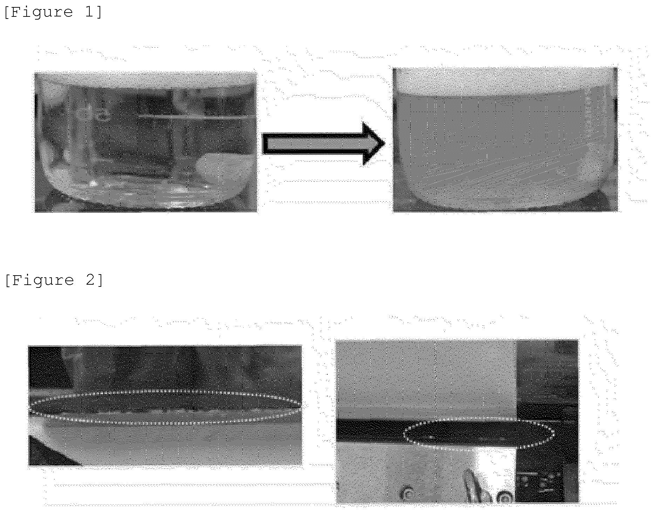

Through the experimental results, it was confirmed that there was a problem in that the case where the existing PHB having a molecular weight 1,300 g/mol was used as in Comparative Examples 1 and 2 could cause a contamination problem of a water treatment membrane manufacturing facility, and the aspect is shown in FIG. 2.

Furthermore, when Table 1 was observed, it was confirmed that the water treatment membranes (Examples 1 to 7) manufactured according to the present invention exhibited higher salt rejections than the water treatment membranes (Comparative Examples 1 and 2) in which PHB having a weight average molecular weight of 1,300 g/mol was used, and it was confirmed that the boron rejection rate in Examples 1 to 7 were higher than those in Comparative Examples 1 and 2.

## Claims

1. A method for manufacturing a water treatment membrane, the method comprising:
preparing a porous support; and
forming a polyamide active layer on the porous support by using an interfacial polymerization of an aqueous solution comprising an amine compound and an organic solution comprising acyl halide,
wherein the aqueous solution or the organic solution comprises a polymer or a polymer having a structure which is bonded to the inside or the surface of the polyamide active layer while maintaining the structure of the polymer represented by the following Chemical Formula 1 and having a weight average molecular weight of 100 g/mol to 1,200 g/mol, and
a content of the polymer is 0.001 wt% or more and 1 wt% or less based on the aqueous solution or the organic solution: 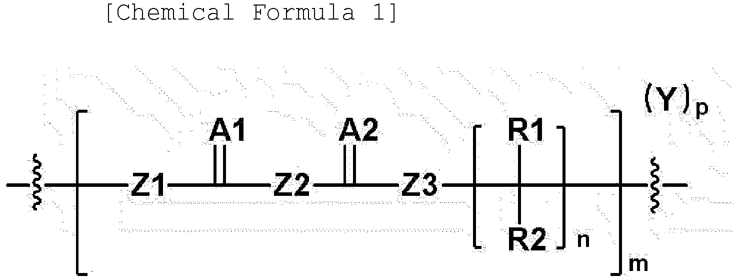
in Chemical Formula 1,
R1 and R2 are hydrogen,
Z1 to Z3 are NH,
A1 and A2 are the same as or different from each other, and are each independently NH, or NH₂⁺,
when at least one of A1 and A2 is NH₂⁺, Y is selected from the group consisting of HSO₄⁻, SO₄²⁻, NO₃⁻, CO₃²⁻, HCO₃⁻, H₂PO₄⁻, HPO₄²⁻, PO₄³⁻, Cl⁻, Br⁻, and F⁻,
n is an integer from 1 to 10,
m is an integer from 1 to 60,
p is an integer from 0 to 4, and
when n, m, and p are each 2 or more, the structures in the parenthesis are the same as or different from each other.

2. A water treatment membrane obtained by the method of claim 1 comprising:
a porous support; and
a polyamide active layer provided on the porous support,
wherein the polyamide active layer comprises a polymer or a polymer having a structure which is bonded to the inside or the surface of the polyamide active layer while maintaining the structure of the polymer represented by the following Chemical Formula 1 having a weight average molecular weight of 100 g/mol to 1,200 g/mol inside or on a surface of the polyamide active layer, and
a content of the polymer is 0.001 wt% or more and 1 wt% or less based on the polyamide active layer: 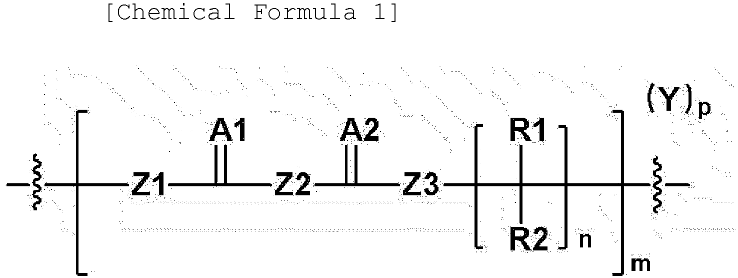
in Chemical Formula 1,
R1 and R2 are hydrogen,
Z1 to Z3 are NH,
A1 and A2 are the same as or different from each other, and are each independently NH, or NH₂⁺,
when at least one of A1 and A2 is NH₂⁺, Y is selected from the group consisting of HSO₄⁻, SO₄²⁻, NO₃⁻, CO₃²⁻, HCO₃⁻, H₂PO₄⁻, HPO₄²⁻, PO₄³⁻, Cl⁻, Br⁻, and F⁻,
n is an integer from 1 to 10,
m is an integer from 1 to 60,
p is an integer from 0 to 4, and
when n, m, and p are each 2 or more, the structures in the parenthesis are the same as or different from each other.

3. A water treatment module comprising the water treatment membrane of claim 2.

## Patentansprüche

1. Verfahren zur Herstellung einer Wasserbehandlungsmembran, bei dem das Verfahren umfasst:
Herstellen eines porösen Trägers; und
Bilden einer aktiven Polyamidschicht auf dem porösen Träger unter Verwendung einer Grenzflächenpolymerisation einer wässrigen Lösung, die eine Aminverbindung und eine organische Lösung, die Acylhalogenid umfasst, umfasst,
wobei die wässrige Lösung oder die organische Lösung ein Polymer oder ein Polymer mit einer Struktur, die an die Innenseite oder die Oberfläche der aktiven Polyamidschicht gebunden ist, während die Struktur des Polymers beibehalten wird, umfasst, das durch die folgende chemische Formel 1 dargestellt ist und das ein gewichtsmittleres Molekulargewicht von 100 g/mol bis 1.200 g/mol aufweist, und
ein Gehalt des Polymers 0,001 Gew.-% oder mehr und 1 Gew.-% oder weniger, bezogen auf die wässrige Lösung oder die organische Lösung, beträgt: 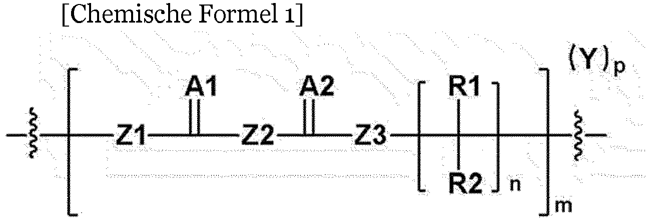
wobei in der chemischen Formel 1
R1 und R2 Wasserstoff sind,
Z1 bis Z3 NH sind,
A1 und A2 gleich oder voneinander verschieden sind und jeweils unabhängig voneinander NH oder NH₂⁺ sind,
wenn mindestens eines von A1 und A2 NH₂⁺ ist, Y ausgewählt ist aus der Gruppe bestehend aus HSO₄⁻, SO₄²⁻, NO₃⁻, CO₃²⁻, HCO₃⁻, H₂PO₄⁻, HPO₄²⁻, PO₄³⁻, Cl⁻, Br⁻ und F⁻,
n eine ganze Zahl von 1 bis 10 ist,
m eine ganze Zahl von 1 bis 60 ist,
p eine ganze Zahl von 0 bis 4 ist und
wenn n, m und p jeweils 2 oder mehr sind, die Strukturen in der Klammer gleich oder voneinander verschieden sind.

2. Wasserbehandlungsmembran, erhalten durch das Verfahren nach Anspruch 1, umfassend:
einen porösen Träger; und
eine aktive Polyamidschicht, die auf dem porösen Träger bereitgestellt ist,
wobei die aktive Polyamidschicht ein Polymer oder ein Polymer mit einer Struktur, die an die Innenseite oder die Oberfläche der aktiven Polyamidschicht gebunden ist, während die Struktur des Polymers beibehalten wird, das durch die folgende chemische Formel 1 dargestellt ist und das ein gewichtsmittleres Molekulargewicht von 100 g/mol bis 1.200 g/mol aufweist, innerhalb oder auf einer Oberfläche der aktiven Polyamidschicht umfasst, und
ein Gehalt des Polymers 0,001 Gew.-% oder mehr und 1 Gew.-% oder weniger, bezogen auf die aktive Polyamidschicht, beträgt: 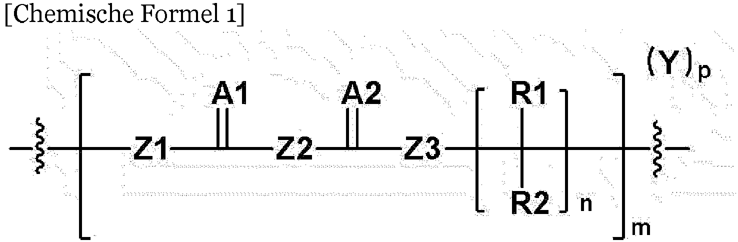
wobei in der chemischen Formel 1
R1 und R2 Wasserstoff sind,
Z1 bis Z3 NH sind,
A1 und A2 gleich oder voneinander verschieden sind und jeweils unabhängig voneinander NH oder NH₂⁺ sind,
wenn mindestens eines von A1 und A2 NH₂⁺ ist, Y ausgewählt ist aus der Gruppe bestehend aus HSO₄⁻, SO₄²⁻, NO₃⁻, CO₃²⁻, HCO₃⁻, H₂PO₄⁻, HPO₄²⁻, PO₄³⁻, Cl⁻, Br⁻ und F⁻,
n eine ganze Zahl von 1 bis 10 ist,
m eine ganze Zahl von 1 bis 60 ist,
p eine ganze Zahl von 0 bis 4 ist und
wenn n, m und p jeweils 2 oder mehr sind, die Strukturen in der Klammer gleich oder voneinander verschieden sind.

3. Wasserbehandlungsmodul, das die Wasserbehandlungsmembran nach Anspruch 2 umfasst.

## Revendications

1. Procédé de fabrication d'une membrane de traitement de l'eau, le procédé comprenant:
la préparation d'un support poreux ; et
la formation d'une couche polyamide active sur le support poreux en utilisant une polymérisation interfaciale d'une solution aqueuse comprenant un composé amine et d'une solution organique comprenant un halogénure d'acyle,
où la solution aqueuse ou la solution organique comprend un polymère ou un polymère ayant une structure qui est liée à l'intérieur ou à la surface de la couche polyamide active tout en maintenant la structure du polymère représentée par la Formule chimique 1 suivante et ayant une masse moléculaire moyenne en poids qui va de 100 g/mol à 1 200 g/mol et
une teneur en le polymère, rapportée à la solution aqueuse ou à la solution organique, est égale ou supérieure à 0,001 % en poids et inférieure ou égale à 1 % en poids : 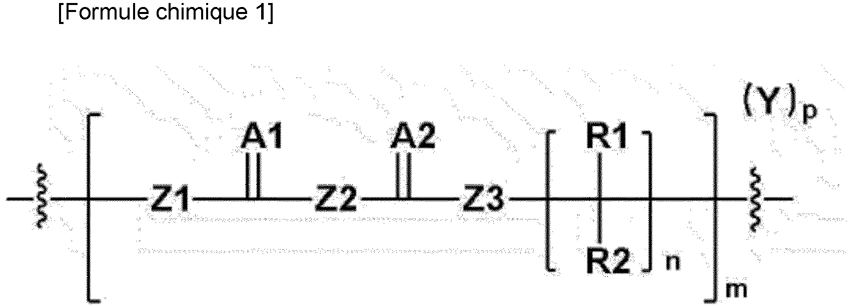
À la Formule chimique 1,
R1 et R2 représentent un hydrogène,
Z1 à Z3 représentent un NH,
A1 et A2 sont identiques ou différents l'un de l'autre et représentent chacun indépendamment un NH ou un NH₂⁺ ;
quand au moins un de A1 et A2 représente un NH₂⁺, Y est sélectionné dans le groupe consistant en HSO₄⁻, SO₄²⁻, NO₃⁻, CO₃²⁻, HCO₃⁻, H₂PO₄⁻, HPO₄²⁻, PO₄³⁻, Cl⁻, Br et F⁻,
n représente un nombre entier allant de 1 à 10 ;
m représente un nombre entier allant de 1 à 60,
p représente un nombre entier allant de 0 et 4 et
quand n, m et p prennent chacun une valeur de 2 ou plus, les structures entre parenthèses sont identiques ou différentes les unes des autres.

2. Membrane de traitement de l'eau obtenue par le procédé de la revendication 1, comprenant :
un support poreux ; et
une couche polyamide active disposée sur le support poreux,
où la couche polyamide active comprend un polymère ou un polymère ayant une structure qui est liée à l'intérieur ou à la surface de la couche polyamide active tout en maintenant la structure du polymère représentée par la Formule chimique 1 suivante ayant une masse moléculaire moyenne en poids qui va de 100 g/mol à 1 200 g/mol à l'intérieur ou sur une surface de la couche polyamide active et
une teneur en le polymère, rapportée à la couche polyamide active, est égale ou supérieure à 0,001 % en poids et inférieure ou égale à 1 % en poids : 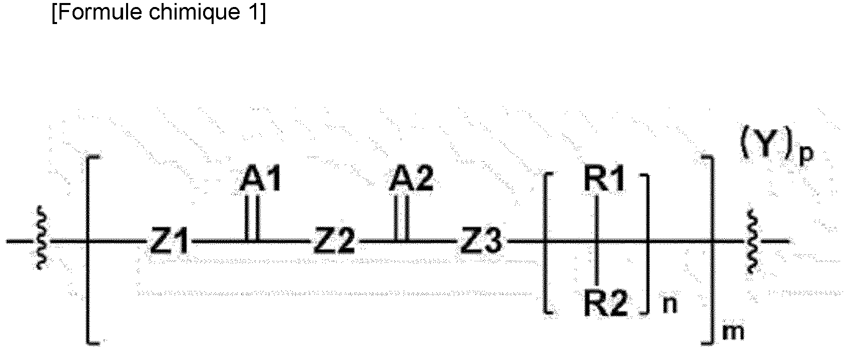
À la Formule chimique 1,
R1 et R2 représentent un hydrogène,
Z1 à Z3 représentent un NH,
A1 et A2 sont identiques ou différents l'un de l'autre et représentent chacun indépendamment un NH ou un NH₂⁺ ;
quand au moins un de A1 et A2 représente un NH₂⁺, Y est sélectionné dans le groupe consistant en HSO₄⁻, SO₄²⁻, NO₃⁻, CO₃²⁻, HCO₃⁻, H₂PO₄⁻, HPO₄²⁻, PO₄³⁻, Cl⁻, Br et F⁻,
n représente un nombre entier allant de 1 à 10 ;
m représente un nombre entier allant de 1 à 60,
p représente un nombre entier allant de 0 et 4 et
quand n, m et p prennent chacun une valeur de 2 ou plus, les structures entre parenthèses sont identiques ou différentes les unes des autres.

3. Module de traitement de l'eau comprenant la membrane de traitement de l'eau de la revendication 2.
